# FASCICULE DE BREVET EUROPEEN

(11) **EP 3 793 963 B1**
(45) Date de publication et mention de la délivrance du brevet: **30.08.2023**
(21) Numéro de dépôt: 19730199.7
(22) Date de dépôt: 15.05.2019
(51) Int. Cl.: C04B 35/80, C04B 41/89, F01D 5/28, C04B 41/45, C04B 41/50, C04B 35/628, C04B 35/573, C04B 41/88, B22C 9/04, C04B 35/565, B22C 7/02

(54) **PROCÉDÉ DE FABRICATION D'UNE PIÈCE CMC**
VERFAHREN ZUR HERSTELLUNG EINES CMC-TEILS
PROCESS FOR MANUFACTURING A CMC PART

(30) Priorité: 15.05.2018 FR 1854047; 15.05.2018 FR 1854053
(43) Date de publication de la demande: 24.03.2021
(73) Titulaire: SAFRAN, 75015 Paris (FR); Safran Ceramics, 33185 Le Haillan (FR); SAFRAN AIRCRAFT ENGINES, 75015 Paris (FR)
(72) Inventeur: PODGORSKI, Michaël, 77550 Moissy-Cramayel (FR); DAMBRINE, Bruno, Jacques, Gérard, 77550 Moissy-Cramayel (FR); MENDEZ, Emilie, Chantal, Gisèle, 77550 Moissy-Cramayel (FR); ZHANG, Wen, 77550 Moissy-Cramayel (FR); RAPPART, Yvan, 77550 Moissy-Cramayel (FR); LELEU, Charles, 77550 Moissy-Cramayel (FR)
(74) Mandataire: Cabinet Beau de Loménie
(86) Numéro de dépôt international: PCT/FR2019/051102
(87) Numéro de publication internationale: WO 2019/220057

(56) Documents cités:
- WO-A1-2014/053751
- WO-A1-2016/001026
- FR-A1- 2 779 425
- US-A- 5 394 930
- US-A1- 2012 171 039
- US-A1- 2016 102 022

## Description

### Domaine Technique

La présente invention concerne un procédé de fabrication d'une pièce en matériau composite à matrice céramique (pièce CMC) mettant en oeuvre une étape d'infiltration à l'état fondu (« Melt-Infiltration »).

### Technique antérieure

Les pièces CMC peuvent former des parties chaudes de turbines à gaz, telles que des parois de chambre de combustion, ou des anneaux de turbine, des distributeurs de turbine ou des aubes de turbines, pour des moteurs aéronautiques ou des turbines industrielles.

Les pièces CMC sont connues pour posséder à la fois de bonnes propriétés mécaniques permettant leur utilisation pour des éléments de structure et la capacité de conserver ces propriétés à des températures élevées. Les pièces CMC comportent un renfort fibreux en fibres réfractaires, typiquement en carbone ou en céramique, qui est densifié par une matrice céramique, par exemple en carbure de silicium (SiC).

Par exemple, les documents WO 2016/001026, FR 2 779 425 et US 2016/102022 décrivent des pièces en CMC. Le document US 5 394 930 A1 décrit un procédé de fabrication d'une pièce composite à matrice métallique par fonderie à la cire perdue.

On connaît la formation de pièces CMC par technique d'infiltration à l'état fondu dans lequel on introduit dans la porosité d'une préforme poreuse une composition fondue comprenant du silicium.

Il peut toutefois s'avérer difficile, dans ce type de technique, d'obtenir directement une pièce CMC à la forme souhaitée (pièce dite « net shape ») avec un état de surface lisse pour celle-ci. Un état de surface lisse pour une pièce CMC peut être souhaitable par exemple lorsque l'on cherche à améliorer les performances aérodynamiques de la pièce, par exemple dans le cas d'une aube.

Il est souhaitable de disposer d'un procédé permettant d'obtenir directement une pièce CMC à la forme souhaitée avec un état de surface lisse pour celle-ci.

En outre, dans les conditions de fonctionnement des turbines aéronautiques, c'est-à-dire à haute température sous atmosphère oxydante et humide, les pièces CMC peuvent être sensibles au phénomène de corrosion. La corrosion du CMC peut résulter de l'oxydation du SiC en silice qui, en présence de vapeur d'eau, se volatilise sous forme d'hydroxydes de silicium Si(OH)₄. Les phénomènes de corrosion entraînent une récession du CMC et affectent la durée de vie de ce dernier. Afin de limiter cette dégradation en fonctionnement, il a été envisagé de former à la surface des pièces CMC des revêtements de barrière environnementale.

Ces revêtements peuvent comprendre une couche de silicate de terre rare qui est liée au matériau CMC sous-jacent par une couche d'accrochage en silicium. La couche d'accrochage permet, d'une part, d'améliorer la liaison de la couche de silicate de terre rare et, d'autre part, de former une couche de silice protectrice, dont la faible perméabilité à l'oxygène participe à la protection du CMC contre l'oxydation. La couche de silicate de terre rare permet, quant à elle, de limiter la diffusion de la vapeur d'eau vers la couche de silice formée par oxydation du silicium et par conséquent de limiter la récession de celle-ci.

Divers procédés sont connus pour réaliser une pièce CMC revêtue d'une couche d'accrochage comprenant du silicium, avant la formation de la barrière environnementale.

A ce titre, on peut citer la réalisation de couches d'accrochage en silicium sur une pièce CMC par procédé de projection thermique sous vide. Dans ce cas, deux étapes distinctes sont mises en oeuvre : la première pour former la pièce CMC, puis la seconde pour former la couche d'accrochage en silicium. La mise en oeuvre de deux étapes distinctes pour former la pièce CMC, d'une part, et la couche d'accrochage en silicium, d'autre part, ne constitue pas une solution optimale lorsqu'une production industrielle est recherchée.

Des développements ont été réalisés dans l'état de la technique afin de permettre la réalisation, en une étape d'infiltration à l'état fondu, d'une pièce CMC revêtue par une couche d'accrochage comprenant du silicium.

Dans ce cadre, il a été proposé de générer une surépaisseur de carbure de silicium (SiC) à la surface de la préforme poreuse, puis d'infiltrer cette surépaisseur et la préforme poreuse sous-jacente par du silicium fondu.

Toutefois, il est alors obtenu une couche d'accrochage comprenant du carbure de silicium dont la présence conduit, en environnement corrosif, à une couche de silice poreuse et fissurée du fait de la formation d'espèces CO et CO₂, diminuant ainsi la protection conférée par la couche d'accrochage. Il est souhaitable de disposer d'un procédé de fabrication dénué des inconvénients des solutions de l'état de la technique.

### Exposé de l'invention

L'invention vise un procédé de fabrication selon la revendication 1.

L'invention permet avantageusement d'obtenir, de manière relativement simple, une pièce CMC de surface lisse directement à la forme souhaitée. En effet, l'emploi d'une cire ou d'une résine permet de remplir les ondulations de surface de la préforme poreuse et confère une surface lisse à la paroi interne du moule carapace et donc à la surface de la pièce obtenue. L'invention permet en particulier de s'affranchir d'un usinage du CMC afin d'obtenir une surface lisse.

Dans un exemple de réalisation, la composition pulvérulente céramique comprend : une poudre de mullite, une poudre de carbure de silicium, une poudre de nitrure de silicium, une poudre de nitrure de bore, ou un mélange de telles poudres.

Le choix de tels matériaux permet avantageusement de former un moule carapace utilisable dans le cas où l'étape d'infiltration par la composition fondue nécessite l'emploi de particulièrement hautes températures (>1500°C) et de particulièrement faibles pressions (<100 mbar). En outre, de tels matériaux présentent une mouillabilité élevée vis-à-vis du silicium fondu, facilitant ainsi l'écoulement de la composition fondue dans le moule carapace.

La composition pulvérulente céramique peut être formée de plusieurs couches de poudre ayant chacune une composition différente. Chacune de ces couches peut être formée par une poudre distincte choisie dans la liste précitée. On peut ainsi obtenir un moule carapace multicouche dont chaque couche présente une composition différente. En variante, la composition pulvérulente céramique peut comprendre une unique poudre choisie dans la liste précitée.

La couche de matériau fugitif dans le modèle ne dépasse pas le plus haut sommet des ondulations de surface de la préforme poreuse. La couche de matériau fugitif peut en particulier arriver à la même hauteur que le plus haut sommet des ondulations de surface de la préforme poreuse.

Dans un exemple de réalisation, la préforme poreuse est une préforme fibreuse tissée obtenue par tissage tridimensionnel.

En particulier, la préforme poreuse peut être partiellement densifiée par une phase de matrice céramique.

Des particules céramiques et/ou de carbone sont présentes dans la porosité de la préforme poreuse.

Dans un exemple de réalisation, la pièce est une pièce de turbomachine. En particulier, la pièce peut être une aube de turbomachine ou un distributeur de turbomachine.

Il est aussi décrit, un procédé hors invention de fabrication d'une pièce en matériau composite à matrice céramique revêtue d'une couche d'accrochage comprenant du silicium, comprenant au moins :
- le revêtement d'une surface externe d'une préforme poreuse par une couche d'un matériau fugitif afin de former un modèle de la pièce revêtue à obtenir ayant les dimensions de cette dernière,
- l'enrobage du modèle formé par une composition pulvérulente céramique,
- le traitement thermique du modèle enrobé afin d'éliminer le matériau fugitif et former un moule carapace en céramique par frittage de la composition pulvérulente céramique,
- l'introduction d'une composition fondue comprenant du silicium à l'intérieur du moule carapace afin d'obtenir la pièce revêtue dans le moule carapace, la composition fondue infiltrant la porosité de la préforme poreuse afin de former la matrice céramique et recouvrant la surface externe afin de former la couche d'accrochage, et
- la séparation du moule carapace de la pièce revêtue obtenue.

Ce procédé permet avantageusement de densifier la préforme poreuse par la matrice céramique, et de former la couche d'accrochage comprenant du silicium en une seule étape. En outre, le procédé permet de former une couche d'accrochage conférant à la pièce CMC sous-jacente, en fonctionnement, une bonne résistance à l'oxydation du fait d'une fissuration réduite de cette couche d'accrochage.

La composition pulvérulente céramique peut comprendre : une poudre de mullite, une poudre de carbure de silicium, une poudre de nitrure de silicium, une poudre de nitrure de bore, ou un mélange de telles poudres.

Le choix de tels matériaux permet avantageusement de former un moule carapace utilisable dans le cas où l'étape d'infiltration par la composition fondue nécessite l'emploi de particulièrement hautes températures (> 1500°C) et de particulièrement faibles pressions (<100 mbar). En outre, de tels matériaux présentent une mouillabilité élevée vis-à-vis du silicium fondu, facilitant ainsi l'écoulement de la composition fondue dans le moule carapace.

La composition pulvérulente céramique peut être formée de plusieurs couches de poudre ayant chacune une composition différente. Chacune de ces couches peut être formée par une poudre distincte choisie dans la liste précitée. On peut ainsi obtenir un moule carapace multicouche dont chaque couche présente une composition différente. En variante, la composition pulvérulente céramique peut comprendre une unique poudre choisie dans la liste précitée.

L'épaisseur de la couche de matériau fugitif dans le modèle peut être supérieure ou égale à 10 µm, cette épaisseur étant mesurée au niveau du plus haut sommet des ondulations de surface de la préforme poreuse et à partir de ce sommet.

Le matériau fugitif peut être une cire ou une résine.

Le choix d'un tel matériau fugitif permet avantageusement d'obtenir un état de surface particulièrement lisse pour la paroi interne du moule carapace et donc pour la couche d'accrochage obtenue.

La préforme poreuse peut être une préforme fibreuse tissée obtenue par tissage tridimensionnel.

Des particules céramiques et/ou de carbone sont présentes dans la porosité de la préforme poreuse.

En particulier, la préforme poreuse peut être partiellement densifiée par une phase de matrice céramique.

La pièce peut être une pièce de turbomachine. En particulier, la pièce peut être une aube de turbomachine ou un distributeur de turbomachine.

Il est également décrit un procédé de fabrication hors invention d'une structure multicouches comprenant au moins :
- la fabrication de la pièce revêtue de la couche d'accrochage par mise en oeuvre d'un procédé tel que décrit plus haut, et
- la formation sur la couche d'accrochage d'un revêtement protecteur.

Dans un exemple de réalisation (hors invention), le revêtement protecteur est un revêtement de barrière environnementale.

### Brève description des dessins

D'autres caractéristiques et avantages de l'invention ressortiront de la description suivante, donnée à titre non limitatif, en référence aux dessins annexés, sur lesquels :
[Fig. 1] La figure 1 est un ordinogramme montrant différentes étapes successives d'un exemple de procédé selon l'invention,
[Fig. 2] La figure 2 illustre de manière schématique une étape du procédé de la figure 1,
[Fig. 3] La figure 3 illustre de manière schématique une étape du procédé de la figure 1,
[Fig. 4] La figure 4 illustre de manière schématique une étape du procédé de la figure 1,
[Fig. 5] La figure 5 illustre de manière schématique une étape du procédé de la figure 1,
[Fig. 6] La figure 6 illustre de manière schématique une étape du procédé de la figure 1,
[Fig. 7] La figure 7 illustre de manière schématique une étape du procédé de la figure 1,
[Fig. 8] La figure 8 illustre de manière schématique une étape du procédé de la figure 1,
[Fig. 9] La figure 9 est un ordinogramme montrant différentes étapes successives d'un exemple de procédé selon le second procédé hors invention décrit,
[Fig. 10] La figure 10 illustre de manière schématique une étape du procédé de la figure 9,
[Fig. 11] La figure 11 illustre de manière schématique une étape du procédé de la figure 9,
[Fig. 12] La figure 12 illustre de manière schématique une étape du procédé de la figure 9,
[Fig. 13] La figure 13 illustre de manière schématique une étape du procédé de la figure 9,
[Fig. 14] La figure 14 illustre de manière schématique une étape du procédé de la figure 9,
[Fig. 15] La figure 15 illustre de manière schématique une étape du procédé de la figure 9,
[Fig. 16] La figure 16 illustre de manière schématique une étape du procédé de la figure 9,
[Fig. 17] La figure 17 illustre de manière schématique une étape du procédé de la figure 9,
[Fig. 18] La figure 18 illustre de manière schématique l'introduction de la composition fondue à l'intérieur du moule carapace dans le cadre d'une variante selon le deuxième procédé hors invention décrit.

### Description des modes de réalisation

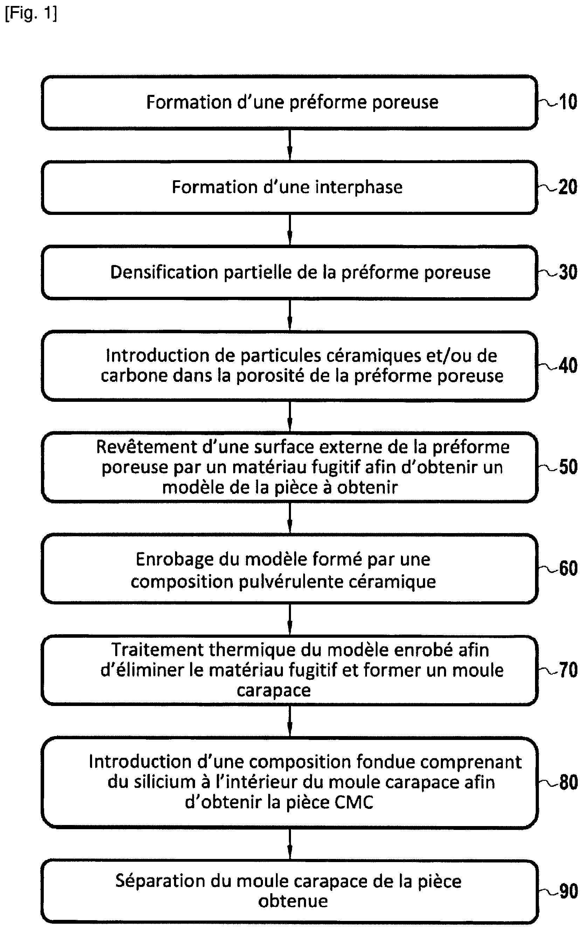

La succession de différentes étapes d'un exemple de procédé selon l'invention est illustrée à la figure 1 qui va être détaillée ci-dessous.

Une préforme poreuse est tout d'abord obtenue (étape 10). La préforme poreuse peut être une préforme fibreuse poreuse. Dans ce cas, elle est destinée à former un renfort fibreux pour la pièce à obtenir.

Durant l'étape 10, une préforme fibreuse poreuse peut être obtenue à partir d'au moins une opération textile. La préforme fibreuse poreuse peut comporter des fils céramiques, des fils carbone ou un mélange de tels fils. En particulier, la préforme fibreuse poreuse peut comporter des fils de carbure de silicium. Les fils de carbure de silicium peuvent présenter une teneur en oxygène inférieure ou égale à 1% en pourcentage atomique. On peut ainsi utiliser des fils fournis sous la dénomination « Hi-Nicalon-S » par la société japonaise NGS.

La préforme fibreuse poreuse peut être réalisée en une seule pièce par tissage tridimensionnel ou à partir d'une pluralité de strates fibreuses bidimensionnelles ou encore à partir de plusieurs couches de tissu unidimensionnel.

Par « tissage tridimensionnel » ou « tissage 3D », il faut comprendre un mode de tissage par lequel certains au moins des fils de chaîne lient des fils de trame sur plusieurs couches de trame. Une inversion des rôles entre chaîne et trame est possible dans le présent texte et doit être considérée comme couverte aussi par les revendications.

La préforme fibreuse poreuse peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, la préforme fibreuse poreuse peut présenter une armure interlock. Par « armure ou tissu interlock », il faut comprendre une armure de tissage 3D dont chaque couche de fils de chaîne lie plusieurs couches de fils de trame avec tous les fils de la même colonne de chaîne ayant le même mouvement dans le plan de l'armure. Différents modes de tissage utilisables pour former la préforme fibreuse poreuse sont notamment décrits dans le document WO 2006/136755.

Il est aussi possible de partir de textures fibreuses telles que des tissus bidimensionnels ou des nappes unidirectionnelles, et d'obtenir la préforme fibreuse poreuse par drapage de telles textures fibreuses sur une forme. Ces textures peuvent éventuellement être liées entre elles par exemple par couture ou implantation de fils pour former la préforme fibreuse poreuse.

Une fois la préforme fibreuse poreuse obtenue, on peut réaliser une étape de traitement de surface des fils, préalablement à la formation de l'interphase pour notamment éliminer l'ensimage présent sur les fils.

On réalise ensuite la formation d'une interphase sur les fils (étape 20). L'interphase peut être déposée au contact des fils. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone).

L'interphase a ici une fonction de défragilisation du matériau composite qui favorise la déviation de fissures éventuelles parvenant à l'interphase après s'être propagées dans la matrice, empêchant ou retardant la rupture de fils par de telles fissures. L'épaisseur de l'interphase peut par exemple être supérieure ou égale à 10 nm, par exemple être comprise entre 10 nm et 1000 nm, voire entre 10 nm et 100 nm. Après formation de l'interphase, la préforme fibreuse reste poreuse, la porosité accessible initiale n'étant comblée que pour une partie minoritaire par l'interphase.

On réalise ensuite une densification partielle de la préforme fibreuse poreuse (étape 30). Une phase de matrice céramique est formée dans la porosité de la préforme fibreuse poreuse. La phase de matrice céramique est ici formée sur l'interphase. La phase de matrice céramique peut être formée au contact de l'interphase. L'épaisseur de la phase de matrice céramique peut être au moins égale à 500 nm, par exemple à 1 µm. La phase de matrice céramique peut être en carbure de silicium. La phase de matrice céramique peut être formée par infiltration chimique en phase vapeur (« Chemical Vapor Infiltration » ; « CVI »).

La phase de matrice céramique permet de constituer une barrière au silicium liquide mis en oeuvre durant l'étape d'infiltration à l'état fondu. La phase de matrice céramique formée lors de l'étape 30 densifie partiellement la préforme fibreuse poreuse. Il subsiste une porosité résiduelle dans la préforme fibreuse poreuse après formation de cette phase de matrice céramique.

Des particules céramiques et/ou de carbone sont ensuite introduites dans la porosité de la préforme fibreuse poreuse (étape 40). Les particules céramiques et/ou de carbone peuvent être introduites, de manière connue en soi, par voie liquide, par exemple par injection d'une barbotine dans la porosité de la préforme poreuse. La taille moyenne (D50) des particules céramiques et/ou de carbone peut être inférieure ou égale à 5 µm, voire à 1 µm.

On pourrait ainsi mettre en oeuvre une préforme poreuse formée d'un bloc compact de particules (préforme non fibreuse), et obtenir le matériau composite par infiltration de cette préforme poreuse par la composition fondue.

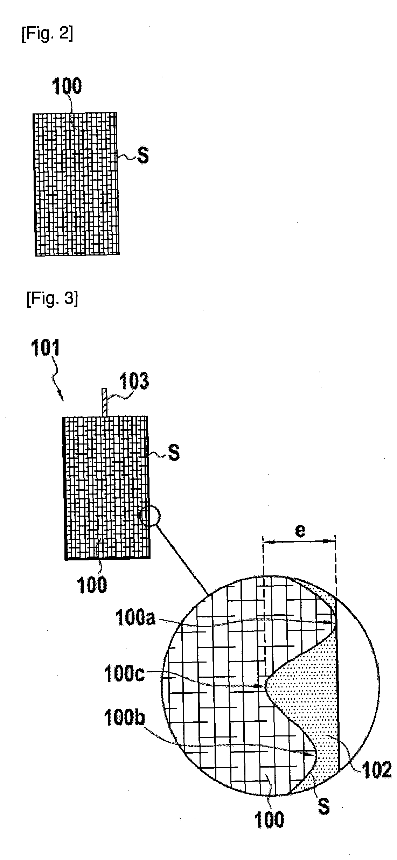

On va maintenant décrire la réalisation des étapes 50 à 90 indiquées à la figure 1 en lien avec les figures 2 à 8 dans le cas d'une préforme fibreuse poreuse 100. Il est entendu que ces étapes pourraient également s'appliquer dans le cadre d'une préforme poreuse formée d'un bloc compact de particules.

La figure 2 illustre la préforme fibreuse poreuse 100 avant formation du modèle. Cette préforme fibreuse poreuse 100 peut être obtenue comme décrit plus haut. La préforme fibreuse poreuse 100 présente une surface externe S.

On a illustré à la figure 3 l'obtention d'un modèle 101 par application sur la surface externe S de la préforme fibreuse poreuse 100 d'un matériau fugitif 102 (étape 50). Dans l'exemple illustré, le matériau fugitif 102 est appliqué sur sensiblement l'intégralité de la surface externe S de la préforme poreuse 100. En variante, le matériau fugitif peut être appliqué sur une partie seulement de la surface externe de la préforme poreuse. Le matériau fugitif 102 est une cire ou une résine. Le matériau fugitif 102 peut ne pas s'infiltrer dans la porosité de la préforme fibreuse 100. Le matériau fugitif 102 peut par exemple être l'alcool polyvinylique (PVA), la polyvinylpyrrolidone (PVP) ou le polyéthylèneglycol (PEG). Comme illustré à la figure 3, la préforme poreuse 100 présente des ondulations de surface comprenant une alternance de sommets 100a et 100b et de creux 100c. La couche de matériau fugitif 102 peut ne pas dépasser le plus haut sommet 100a des ondulations de surface de la préforme poreuse 100. Dans l'exemple illustré, la couche de matériau fugitif 102 arrive à la même hauteur que le plus haut sommet 100a des ondulations de surface et permet de remplir l'intégralité des ondulations de surface de la préforme poreuse 100.

La couche de matériau fugitif 102 peut avoir une épaisseur e inférieure ou égale à 150 µm, par exemple inférieure ou égale à 50 µm, par exemple comprise entre 10 µm et 50 µm, cette épaisseur étant mesurée au niveau du plus bas creux 100c des ondulations de surface de la préforme poreuse et à partir de ce creux.

Le matériau fugitif 102 peut être appliqué sur la surface externe S par technique d'enduction par trempage (« dip-coating ») ou par injection dans un moule avec une cavité creuse autour de la zone à revêtir.

Le matériau fugitif 102 peut être appliqué au contact de la surface externe S. On peut former une portion 103 en matériau fugitif afin de permettre la formation d'un orifice d'injection dans le moule carapace, comme il sera décrit plus bas.

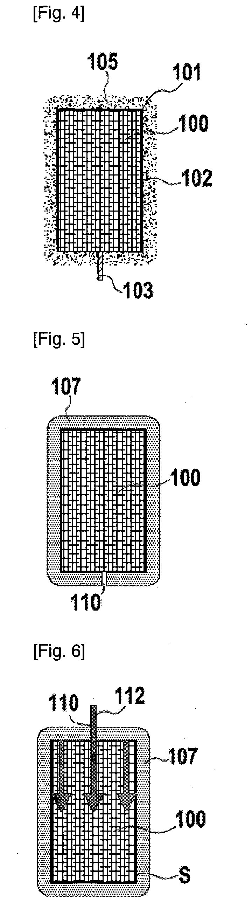

Le modèle 101 ainsi obtenu est ensuite enrobé par une composition pulvérulente céramique 105 (figure 4, étape 60). La composition pulvérulente céramique 105 comprend une ou plusieurs poudre(s) céramique(s). La composition pulvérulente céramique 105 peut être appliquée au contact du matériau fugitif 102. La portion 103 dépasse de l'enrobage formé par la composition pulvérulente céramique 105 de sorte à pouvoir ménager un orifice d'injection dans le moule carapace.

La technique mise en oeuvre pour appliquer les particules de la composition pulvérulente céramique 105 autour du matériau fugitif 102, ainsi que la formation du moule carapace subséquente correspondent à des techniques connues en soi dans le cadre de procédés de fonderie à la cire perdue.

Ainsi, le modèle 101 peut être trempé dans une barbotine comprenant une poudre céramique 105, par exemple sous forme colloïdale. Le milieu liquide de la barbotine peut être aqueux ou organique.

On peut ensuite réaliser une opération de sablage durant laquelle du sable est projeté sur le modèle trempé 101. Le produit ainsi obtenu est ensuite séché. Les étapes successives de trempe et de sablage sont généralement répétées plusieurs fois jusqu'à obtenir une épaisseur suffisante pour la paroi du moule carapace. On peut en particulier tremper le modèle successivement dans des barbotines ayant chacune une poudre céramique distincte, afin de former un moule carapace multicouches.

La composition pulvérulente céramique 105 peut comprendre une poudre de mullite, une poudre de carbure de silicium, une poudre de nitrure de silicium, une poudre de nitrure de bore, ou un mélange de telles poudres. Comme indiqué plus haut, la composition pulvérulente céramique peut être formée de plusieurs couches de poudre ayant chacune une composition différente. Chacune de ces couches peut être formée par une poudre distincte choisie dans la liste précitée. En variante, la composition pulvérulente céramique peut comprendre une unique poudre choisie dans la liste précitée.

La taille moyenne des particules de la composition pulvérulente céramique (taille D50) peut par exemple être comprise entre 1 µm et 50 µm, par exemple entre 5 µm et 30 µm, par exemple entre 10 µm et 20 µm.

Le modèle enrobé est ensuite soumis à un traitement thermique (étape 70 et figure 5). Le traitement thermique permet, d'une part, d'éliminer le matériau fugitif 102 et, d'autre part, de fritter la composition pulvérulente céramique 105.

On obtient après le traitement thermique un moule carapace 107 entourant la préforme poreuse 100. Le moule carapace 107 présente un orifice 110 par lequel la composition fondue est destinée à être introduite.

On introduit ensuite une composition fondue 112 comprenant du silicium à l'intérieur du moule carapace 107 au travers de l'orifice 110 (figure 6, étape 80). On utilise ici une technique d'infiltration à l'état fondu (« Melt-Infiltration »). Le moule carapace 107 est non réactif vis-à-vis de la composition fondue 112, et plus généralement n'est pas affecté lors de l'introduction de la composition fondue 112.

On effectue l'introduction de la composition fondue 112 sous vide. La pression imposée durant cette étape peut être inférieure ou égale à 100 mbar.

On peut effectuer l'introduction de la composition fondue 112 à température supérieure à 1414°C (température de fusion du silicium) de préférence supérieure ou égale à 1420°C.

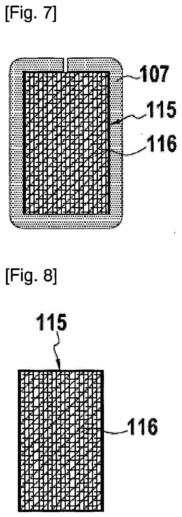

Les flèches sur la figure 6 indiquent schématiquement le trajet de la composition fondue 112. La préforme 100 est maintenue en position dans le moule carapace 107 durant l'introduction de la composition fondue 112 par appui des sommets des ondulations de surface de cette préforme 100 sur le moule carapace 107. Comme illustré, la composition fondue 112 infiltre la porosité interne de la préforme poreuse 100 afin de former une matrice céramique 116 densifiant cette préforme. On peut former une matrice céramique 116 comprenant du carbure de silicium. Cette matrice peut être formée par voie réactive lorsque la préforme poreuse est chargée par des particules de carbone, ou par voie non réactive. On obtient ainsi une pièce CMC 115 (figure 7). La pièce obtenue reprend la forme du moule et en particulier son état de surface. On obtient ainsi une pièce CMC avec une surface lisse sans avoir à réaliser un usinage du CMC.

La composition fondue 112 introduite peut correspondre à du silicium fondu seul ou à un alliage de silicium à l'état fondu lequel contient en outre un ou plusieurs autres éléments tels que du titane, du molybdène, du bore, du fer ou du niobium. La teneur massique en silicium dans la composition fondue peut être supérieure ou égale à 50%, voire à 90%.

On sépare ensuite la pièce 115 du moule carapace 107, par une opération de décochage, c'est-à-dire en brisant le moule carapace 107, de manière classique à ce qui est effectué dans le cadre des procédés de fonderie à la cire perdue.

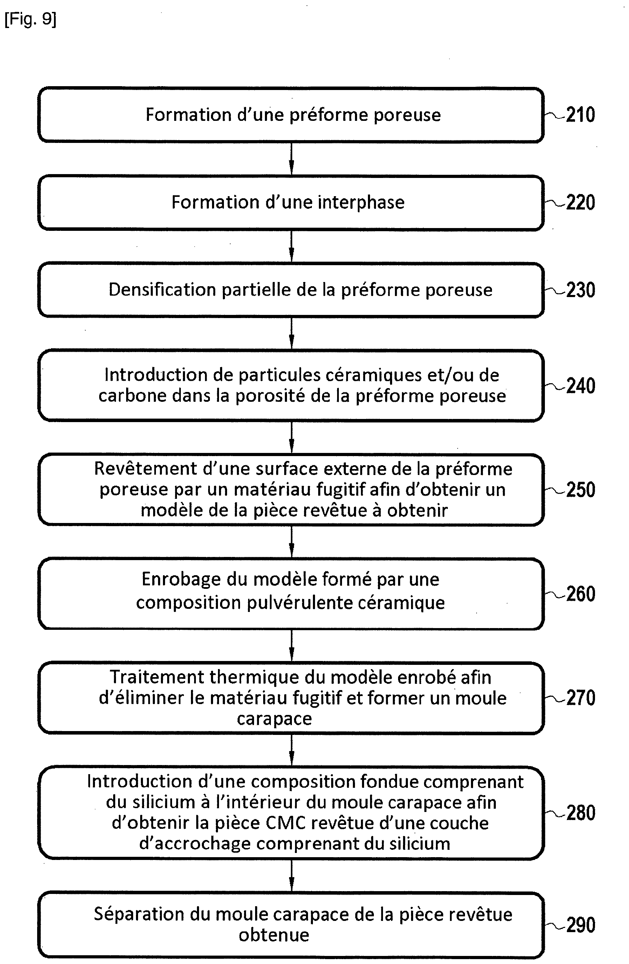

La succession de différentes étapes d'un exemple de procédé hors invention est illustrée à la figure 9 qui va être détaillée ci-dessous.

Une préforme poreuse est tout d'abord obtenue (étape 210). La préforme poreuse peut être une préforme fibreuse poreuse. Dans ce cas, elle est destinée à former un renfort fibreux pour la pièce revêtue à obtenir.

Durant l'étape 210, une préforme fibreuse poreuse peut être obtenue à partir d'au moins une opération textile. La préforme fibreuse poreuse peut comporter des fils céramiques, des fils carbone ou un mélange de tels fils. En particulier, la préforme fibreuse poreuse peut comporter des fils de carbure de silicium. Les fils de carbure de silicium peuvent présenter une teneur en oxygène inférieure ou égale à 1% en pourcentage atomique. On peut ainsi utiliser des fils fournis sous la dénomination « Hi-Nicalon-S » par la société japonaise NGS.

La préforme fibreuse poreuse peut être réalisée en une seule pièce par tissage tridimensionnel ou à partir d'une pluralité de strates fibreuses bidimensionnelles ou encore à partir de plusieurs couches de tissu unidimensionnel.

La préforme fibreuse poreuse peut, par exemple, présenter une armure multi-satin, c'est-à-dire être un tissu obtenu par tissage tridimensionnel avec plusieurs couches de fils de trame dont l'armure de base de chaque couche est équivalente à une armure de type satin classique mais avec certains points de l'armure qui lient les couches de fils de trame entre elles. En variante, la préforme fibreuse poreuse peut présenter une armure interlock. Différents modes de tissage utilisables pour former la préforme fibreuse poreuse sont notamment décrits dans le document WO 2006/136755.

Il est aussi possible de partir de textures fibreuses telles que des tissus bidimensionnels ou des nappes unidirectionnelles, et d'obtenir la préforme fibreuse poreuse par drapage de telles textures fibreuses sur une forme. Ces textures peuvent éventuellement être liées entre elles par exemple par couture ou implantation de fils pour former la préforme fibreuse poreuse.

Une fois la préforme fibreuse poreuse obtenue, on peut réaliser une étape de traitement de surface des fils, préalablement à la formation de l'interphase pour notamment éliminer l'ensimage présent sur les fils.

On réalise ensuite la formation d'une interphase sur les fils (étape 220). L'interphase peut être déposée au contact des fils. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone).

L'interphase a ici une fonction de défragilisation du matériau composite qui favorise la déviation de fissures éventuelles parvenant à l'interphase après s'être propagées dans la matrice, empêchant ou retardant la rupture de fils par de telles fissures.

L'épaisseur de l'interphase peut par exemple être supérieure ou égale à 10 nm, par exemple être comprise entre 10 nm et 1000 nm, voire entre 10 nm et 100 nm. Après formation de l'interphase, la préforme fibreuse reste poreuse, la porosité accessible initiale n'étant comblée que pour une partie minoritaire par l'interphase.

On réalise ensuite une densification partielle de la préforme fibreuse poreuse (étape 230). Une phase de matrice céramique est formée dans la porosité de la préforme fibreuse poreuse. La phase de matrice céramique est ici formée sur l'interphase. La phase de matrice céramique peut être formée au contact de l'interphase. L'épaisseur de la phase de matrice céramique peut être au moins égale à 500 nm, par exemple à 1 µm. La phase de matrice céramique peut être en carbure de silicium. La phase de matrice céramique peut être formée par infiltration chimique en phase vapeur (« Chemical Vapor Infiltration » ; « CVI »).

La phase de matrice céramique permet de constituer une barrière au silicium liquide mis en oeuvre durant l'étape d'infiltration à l'état fondu. La phase de matrice céramique formée lors de l'étape 230 densifie partiellement la préforme fibreuse poreuse. Il subsiste une porosité résiduelle dans la préforme fibreuse poreuse après formation de cette phase de matrice céramique.

Des particules céramiques et/ou de carbone sont ensuite introduites dans la porosité de la préforme fibreuse poreuse (étape 240). Les particules céramiques et/ou de carbone peuvent être introduites, de manière connue en soi, par voie liquide, par exemple par injection d'une barbotine dans la porosité de la préforme poreuse. La taille moyenne (D50) des particules céramiques et/ou de carbone peut être inférieure ou égale à 5 µm, voire à 1 µm.

On pourrait ainsi mettre en oeuvre une préforme poreuse formée d'un bloc compact de particules (préforme non fibreuse), et obtenir le matériau composite par infiltration de cette préforme poreuse par la composition fondue.

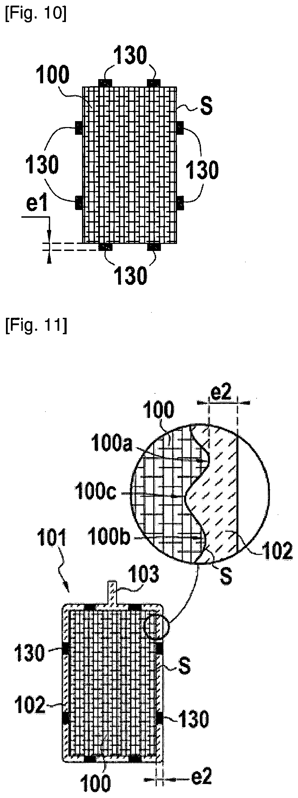

On va maintenant décrire la réalisation des étapes 250 à 290 indiquées à la figure 9 (hors invention) en lien avec les figures 10 à 17 (également hors invention) dans le cas d'une préforme fibreuse poreuse 100. Il est entendu que ces étapes pourraient également s'appliquer dans le cadre d'une préforme poreuse formée d'un bloc compact de particules.

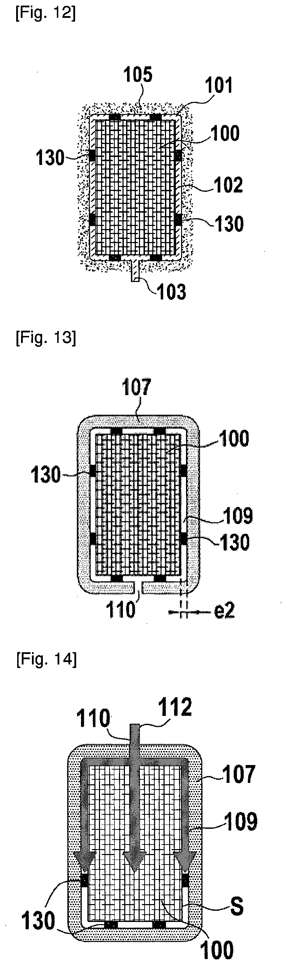

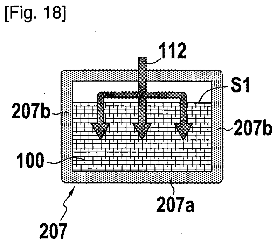

La figure 10 illustre la préforme fibreuse poreuse 100 avant formation du modèle. Cette préforme fibreuse poreuse 100 peut être obtenue comme décrit plus haut. La préforme fibreuse poreuse 100 présente une surface externe S. Dans cet exemple, la préforme poreuse 100 présente sur sa surface externe S une pluralité d'éléments de maintien 130 qui sont destinés à assurer le maintien en position de la préforme 100 durant l'étape ultérieure d'introduction de la composition fondue 112 dans le moule carapace 107 (voir figure 14). Les éléments de maintien 130 forment des reliefs en saillie s'étendant depuis la surface externe S. Les éléments de maintien 130 peuvent comprendre du silicium. En particulier, les éléments de maintien 130 peuvent avoir la même composition que la composition fondue 112. Les éléments de maintien 130 peuvent être uniformément répartis sur la surface externe S. Les éléments de maintien 130 peuvent être fixés à la surface externe S de la préforme 100 par une composition de fixation. La composition de fixation peut être choisie parmi : les résines précéramiques, comme les résines polycarbosilane ou polycarbosilazane, les silicones ou les liants, comme les l'alcool polyvinylique (PVA), le polyéthylèneglycol (PEG) ou la polyvinylpyrrolidone (PVP). L'utilisation d'éléments de maintien 130 n'est pas obligatoire, comme il sera décrit plus bas en lien avec la figure 18.

On a illustré à la figure 11 l'obtention d'un modèle 101 par application sur la surface externe S de la préforme fibreuse poreuse 100 d'un matériau fugitif 102 (étape 250). Dans l'exemple illustré, le matériau fugitif 102 est appliqué sur sensiblement l'intégralité de la surface externe S de la préforme poreuse 100. En variante, le matériau fugitif peut être appliqué sur une partie seulement de la surface externe de la préforme poreuse, comme dans le cas de la figure 18. Le matériau fugitif 102 peut être une cire ou une résine. Le matériau fugitif 102 peut ne pas s'infiltrer dans la porosité de la préforme fibreuse 100. Le matériau fugitif 102 peut par exemple être l'alcool polyvinylique (PVA), le polyéthylèneglycol (PEG) ou la polyvinylpyrrolidone (PVP). Le matériau fugitif 102 peut être appliqué autour des éléments de maintien 130. Le matériau fugitif 102 peut être appliqué entre les éléments de maintien 130. L'épaisseur e₁ des éléments de maintien 130 peut être supérieure ou égale à l'épaisseur e₂ du matériau fugitif 102 dans le modèle 101. Dans l'exemple illustré, l'épaisseur e₁ des éléments de maintien 130 est sensiblement égale à l'épaisseur e₂ du matériau fugitif 102. En outre, la préforme poreuse 100 présente des ondulations de surface comprenant une alternance de sommets 100a et 100b et de creux 100c. La couche de matériau fugitif 102 peut recouvrir le plus haut sommet 100a des ondulations de surface de la préforme poreuse 100 et avoir une épaisseur e₂, mesurée au niveau de ce sommet 100a, supérieure ou égale à 10 µm, par exemple à 25 µm, et par exemple comprise entre 25 µm et 150 µm.

Le matériau fugitif 102 peut être appliqué sur la surface externe S par enduction par trempage (« dip-coating ») ou par injection dans un moule avec une cavité creuse autour de la zone à revêtir.

Le matériau fugitif 102 peut être appliqué au contact de la surface externe S. On peut former une portion 103 en matériau fugitif afin de permettre la formation d'un orifice d'injection dans le moule carapace, comme il sera décrit plus bas.

Le modèle 101 ainsi formé présente les dimensions de la pièce revêtue à obtenir. En particulier, l'épaisseur e₂ du matériau fugitif 102 correspond à l'épaisseur e₂ de la couche d'accrochage comprenant du silicium à obtenir.

Le modèle 101 ainsi obtenu est ensuite enrobé par une composition pulvérulente céramique 105 (figure 12, étape 260). La composition pulvérulente céramique 105 comprend une ou plusieurs poudre(s) céramique(s). La composition pulvérulente céramique 105 peut être appliquée au contact du matériau fugitif 102. La portion 103 dépasse de l'enrobage formé par la composition pulvérulente céramique 105 de sorte à pouvoir ménager un orifice d'injection dans le moule carapace.

La technique mise en oeuvre pour appliquer les particules de la composition pulvérulente céramique 105 autour du matériau fugitif 102, ainsi que la formation du moule carapace subséquente correspondent à des techniques connues en soi dans le cadre de procédés de fonderie à la cire perdue.

Ainsi, le modèle 101 peut être trempé dans une barbotine comprenant une poudre céramique, par exemple sous forme colloïdale. Le milieu liquide de la barbotine peut être aqueux ou organique.

On peut ensuite réaliser une opération de sablage durant laquelle du sable est projeté sur le modèle trempé 101. Le produit ainsi obtenu est ensuite séché. Les étapes successives de trempe et de sablage sont généralement répétées plusieurs fois jusqu'à obtenir une épaisseur suffisante pour la paroi du moule carapace. On peut en particulier tremper le modèle successivement dans des barbotines ayant chacune une poudre céramique distincte, afin de former un moule carapace multicouche.

La composition pulvérulente céramique 105 peut comprendre une poudre de mullite, une poudre de carbure de silicium, une poudre de nitrure de silicium, une poudre de nitrure de bore, ou un mélange de telles poudres. Comme indiqué plus haut, la composition pulvérulente céramique peut être formée de plusieurs couches de poudre ayant chacune une composition différente. Chacune de ces couches peut être formée par une poudre distincte choisie dans la liste précitée. En variante, la composition pulvérulente céramique peut comprendre une unique poudre choisie dans la liste précitée.

La taille moyenne des particules de la composition pulvérulente céramique (taille D50) peut par exemple être comprise entre 1 µm et 50 µm, par exemple entre 5 µm et 30 µm, par exemple entre 10 µm et 20 µm.

Le modèle enrobé est ensuite soumis à un traitement thermique (étape 270 et figure 13). Le traitement thermique permet, d'une part, d'éliminer le matériau fugitif 102 et, d'autre part, de fritter la composition pulvérulente céramique 105.

On obtient après le traitement thermique un moule carapace 107 entourant la préforme poreuse 100. Dans l'exemple illustré, les éléments de maintien 130 sont en appui sur la paroi interne du moule carapace 107 afin de maintenir la préforme 100 en position. Le moule carapace 107 présente un orifice 110 par lequel la composition fondue est destinée à être introduite. Un espace interne 109 est défini entre la préforme poreuse 100 et le moule carapace 107. L'épaisseur e₂ de cet espace interne 109 correspond ici à l'épaisseur e₂ de la couche de matériau fugitif 102 précédemment appliquée, ainsi qu'à l'épaisseur e₂ de la couche d'accrochage à obtenir. L'espace interne 109 peut s'étendre autour de la préforme poreuse 100, comme illustré. L'espace interne 109 peut être en regard de chacune des faces de la préforme 100, comme illustré. Dans une variante, l'espace interne n'est en regard que d'une seule face de la préforme, seule cette face étant destinée à être revêtue par la couche d'accrochage (voir figure 18).

On introduit ensuite une composition fondue 112 comprenant du silicium à l'intérieur du moule carapace 107 au travers de l'orifice 110 (figure 14, étape 280). On utilise ici une technique d'infiltration à l'état fondu (« Melt-Infiltration »). Le moule carapace 107 est non réactif vis-à-vis de la composition fondue 112, et plus généralement n'est pas affecté lors de l'introduction de la composition fondue 112.

On effectue l'introduction de la composition fondue 112 sous vide. La pression imposée durant cette étape peut être inférieure ou égale à 100 mbar.

On peut effectuer l'introduction de la composition fondue 112 à température supérieure à 1414°C (température de fusion du silicium), de préférence supérieure ou égale à 1420°C.

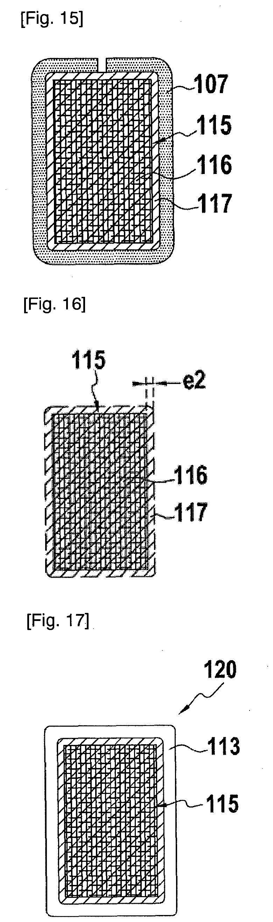

Les flèches sur la figure 14 indiquent schématiquement le trajet de la composition fondue 112. Les éléments de maintien 130 permettent de maintenir la préforme 100 en position durant l'introduction de la composition fondue 112. Comme illustré, la composition fondue 112 infiltre la porosité interne de la préforme poreuse 100 afin de former une matrice céramique 116 densifiant cette préforme. On peut former une matrice céramique 116 comprenant du carbure de silicium. Cette matrice peut être formée par voie réactive lorsque la préforme poreuse est chargée par des particules de carbone, ou par voie non réactive. On obtient ainsi une pièce CMC 115 (figure 15).

En outre, la composition fondue 112 est introduite dans l'espace interne 109 afin de former la couche d'accrochage 117 comprenant du silicium. Lors de la mise en contact avec la composition fondue 112, les éléments de maintien 130 peuvent fondre et être incorporés à la couche d'accrochage 117 formée. Cette couche d'accrochage 117 recouvre la pièce CMC 115 (figure 15). La couche d'accrochage obtenue 117 est avantageusement dépourvue de carbone, en particulier de SiC, afin de ne pas affecter négativement sa capacité de protection en milieu oxydant.

La composition fondue 112 introduite peut correspondre à du silicium fondu seul ou à un alliage de silicium à l'état fondu lequel contient en outre un ou plusieurs autres éléments tels que du titane, du molybdène, du bore, du fer ou du niobium. La teneur massique en silicium dans la composition fondue peut être supérieure ou égale à 50%, voire à 90%.

On sépare ensuite la pièce revêtue 115 du moule carapace 107, par une opération de décochage, c'est-à-dire en brisant le moule carapace 107, de manière classique à ce qui est effectué dans le cadre des procédés de fonderie à la cire perdue.

Le procédé a ainsi permis de former en une seule étape une pièce CMC 115 revêtue par une couche d'accrochage 117 comprenant du silicium.

On peut alors former sur la couche d'accrochage 117 une barrière environnementale 113, de manière connue en soi. On obtient alors une structure multicouches 120 (figure 17) qui est par exemple destinée à être utilisée dans une turbomachine. La barrière environnementale 113 peut, de manière connue en soi, comprendre au moins une couche comprenant un silicate de terre rare. On pourrait en variante former un autre type de revêtement protecteur comme une barrière thermique par exemple.

On a représenté à la figure 18 (hors invention) une variante correspondant à un cas où le matériau fugitif a été déposé sur une partie seulement de la surface externe de la préforme poreuse 100. La figure 18 illustre l'étape d'introduction de la composition fondue 112 à l'intérieur du moule carapace 207. Dans ce cas, le matériau fugitif n'avait été déposé que sur une partie de la surface externe, cette partie étant indiquée par la référence S1 sur la figure 10.

A la différence de l'exemple illustré en lien avec les figures 11 à 17 (hors invention), l'exemple de la figure 18 (hors invention) ne met pas en oeuvre d'éléments 130 rapportés permettant de maintenir la préforme 100 durant l'introduction de la composition fondue 112. Dans cette variante, le moule carapace 207 permet de maintenir la préforme 100 en position. Le moule carapace 207 est en effet en appui sur la préforme 100. Le moule carapace 207 est en appui sur la préforme 100 sur la portion de la surface externe de la préforme 100 n'ayant pas été revêtue par le matériau fugitif. Comme illustré, le moule carapace 207 peut comporter une paroi de support 207a portant la préforme 100 et des parois latérales 207b. Les parois latérales 207b sont en appui sur la préforme 100 et la préforme 100 est située entre les parois latérales 207b.

L'expression « compris(e) entre ... et ... » doit se comprendre comme incluant les bornes.

## Revendications

1. Procédé de fabrication d'une pièce (115) en matériau composite à matrice céramique, comprenant au moins :
- le revêtement d'une surface externe (S) d'une préforme poreuse (100) par une couche d'un matériau fugitif (102) afin de former un modèle (101) de la pièce à obtenir, le matériau fugitif étant une cire ou une résine, la couche de matériau fugitif dans le modèle ne dépassant pas le plus haut sommet (100a) des ondulations de surface de la préforme poreuse, et des particules céramiques et/ou de carbone étant présentes dans la porosité de la préforme poreuse,
- l'enrobage du modèle formé par une composition pulvérulente céramique (105),
- le traitement thermique du modèle enrobé afin d'éliminer le matériau fugitif et former un moule carapace (107) en céramique par frittage de la composition pulvérulente céramique,
- l'introduction d'une composition fondue (112) comprenant du silicium à l'intérieur du moule carapace afin d'obtenir la pièce dans le moule carapace, la composition fondue infiltrant la porosité de la préforme poreuse afin de former la matrice céramique, et
- la séparation du moule carapace de la pièce obtenue.

2. Procédé selon la revendication 1, dans lequel la composition pulvérulente céramique (105) comprend: une poudre de mullite, une poudre de carbure de silicium, une poudre de nitrure de silicium, une poudre de nitrure de bore, ou un mélange de telles poudres.

3. Procédé selon l'une quelconque des revendications 1 ou 2, dans lequel la préforme poreuse (100) est une préforme fibreuse tissée obtenue par tissage tridimensionnel.

4. Procédé selon la revendication 3, dans lequel la préforme poreuse (100) est partiellement densifiée par une phase de matrice céramique.

5. Procédé selon l'une quelconque des revendications 1 à 4, dans lequel la pièce (115) est une pièce de turbomachine.

## Patentansprüche

1. Verfahren zur Herstellung eines Teils (115) aus Verbundmaterial mit keramischer Matrix, umfassend zumindest:
- die Beschichtung einer äußeren Oberfläche (S) einer porösen Vorform (100) mit einer Schicht eines flüchtigen Materials (102), um ein Modell (101) des zu erhaltenden Teils zu bilden, wobei das flüchtige Material ein Wachs oder ein Harz ist, wobei die Schicht eines flüchtigen Materials in dem Modell nicht über den höchsten Punkt (100a) von Wellungen der Oberfläche der porösen Vorform hinausreicht, und Partikel aus Keramik und/oder Kohlenstoff in den Poren der porösen Vorform vorhanden sind,
- die Ummantelung des gebildeten Modells mit einer pulverförmigen keramischen Zusammensetzung (105),
- die Wärmebehandlung des ummantelten Modells, um das flüchtige Material zu beseitigen und eine Maskenform (107) aus Keramik durch Sinterung der pulverförmigen keramischen Zusammensetzung zu bilden,
- die Einbringung einer geschmolzenen Zusammensetzung (112) umfassend Silizium in das Innere der Maskenform, um den Teil in der Maskenform zu erhalten, wobei die geschmolzene Zusammensetzung die Poren der porösen Vorform infiltriert, um die keramische Matrix zu bilden, und
- die Trennung der Maskenform von dem erhaltenen Teil.

2. Verfahren nach Anspruch 1, wobei die pulverförmige keramische Zusammensetzung (105) umfasst: ein Mullit-Pulver, ein Siliziumkarbid-Pulver, ein Siliziumnitrid-Pulver, ein Bornitrid-Pulver oder eine Mischung solcher Pulver.

3. Verfahren nach einem der Ansprüche 1 oder 2, wobei die poröse Vorform (100) eine gewebte Faser-Vorform ist, die durch dreidimensionale Verwebung erhalten wird.

4. Verfahren nach Anspruch 3, wobei die poröse Vorform (100) durch eine keramische Matrixphase teilweise verdichtet ist.

5. Verfahren nach einem der Ansprüche 1 bis 4, wobei der Teil (115) ein Teil einer Turbomaschine ist.

## Claims

1. A process for manufacturing a part (115) made of a ceramic matrix composite material, comprising at least:
- coating an outer surface (S) of a porous preform (100) with a layer of a fugitive material (102) to form a model (101) of the part to be obtained, the fugitive material being a wax or a resin, the fugitive material layer in the model not exceeding the highest peak (100a) of the surface undulations of the porous preform, and ceramic and/or carbon particles being present in the porosity of the porous preform,
- coating the model formed with a ceramic powder composition (105),
- heat treating the coated model to remove the fugitive material and form a ceramic shell mold (107) by sintering of the ceramic powder composition,
- introducing a molten composition (112) comprising silicon into the shell mold to obtain the part in the shell mold, the molten composition infiltrating the porosity of the porous preform to form the ceramic matrix, and
- separating the shell mold from the part obtained.

2. The process as claimed in claim 1, wherein the ceramic powder composition (105) comprises: a mullite powder, a silicon carbide powder, a silicon nitride powder, a boron nitride powder, or a mixture of such powders.

3. The process as claimed in any one of claims 1 or 2, wherein the porous preform (100) is a woven fibrous preform obtained by three-dimensional weaving.

4. The process as claimed in claim 3, wherein the porous preform (100) is partially densified by a ceramic matrix phase.

5. The process as claimed in any one of claims 1 to 4, wherein the part (115) is a turbomachine part.
